# EUROPEAN PATENT APPLICATION

(11) **EP 4 524 197 A1**
(43) Date of publication of application: **19.03.2025**
(21) Application number: 23827065.6
(22) Date of filing: 14.06.2023
(51) Int. Cl.: C08L 67/02, C08K 3/013, C08K 5/29, C08K 9/04

(54) **POLYALKYLENE TEREPHTHALATE RESIN COMPOSITION AND RESIN MOLDED ARTICLE**

(30) Priority: 23.06.2022 JP 2022101226
(71) Applicant: Polyplastics Co., Ltd., Tokyo 108-8280 (JP)
(72) Inventor: SAITO, Itsuki, Fuji-shi, Shizuoka 416-8533 (JP); GOSHIMA, Kazuya, Fuji-shi, Shizuoka 416-8533 (JP); FUKATSU, Hiroki, Fuji-shi, Shizuoka 416-8533 (JP)
(74) Representative: Maiwald GmbH
(86) International application number: PCT/JP2023/022008
(87) International publication number: WO 2023/248879

(57) **Abstract**

A polyalkylene terephthalate resin composition containing a polyalkylene terephthalate resin (A), a carbodiimide compound (B), and an inorganic filler (C) surface-treated with a sizing agent containing a polymer including a constituent unit derived from a carboxylic acid and/or a carboxylic anhydride and an epoxy resin, in which 0.4 to 10 parts by mass of the carbodiimide compound (B) is contained based on 100 parts by mass of the polyalkylene terephthalate resin (A).

## Description

### Technical Field

The present invention relates to a polyalkylene terephthalate resin composition and a resin molded article.

### Background Art

Polyester resins (polyalkylene terephthalate resin) are excellent in terms of mechanical characteristics, electrical characteristics, heat resistance and moldability. Particularly, addition of an inorganic filler such as glass fibers improves the mechanical characteristics or the heat resistance, and polyester resins are thus in wide use in a variety of fields such as automobile parts, electrical/electronic equipment parts and precision equipment parts. However, polyester resins have ester groups in the molecule, and are thus easily hydrolyzed in hot and humid environments, which creates a consistent demand for improvement in hydrolysis resistance in automobile parts for which environment changes significantly.

Upon improving the hydrolysis resistance of polyester resins themselves, it is generally known that an epoxy resin or a carbodiimide compound is added to reduce the amount of a terminal carboxyl group (refer to Patent Literatures 1 and 2).

Patent Literature 1 describes a resin composition composed of a polybutylene terephthalate resin having a terminal carboxyl group in an amount of 30 meq/kg or less, a carbodiimide compound, a fibrous filler, and an elastomer, and describes that heat shock resistance and hydrolysis resistance are improved by containing a carbodiimide functional group in an amount of 0.3 to 1.5 equivalents when the amount of the terminal carboxyl group in the polybutylene terephthalate resin is set as one.

Patent Literature 2 describes that hydrolysis resistance is improved by adding an epoxy compound to polybutylene terephthalate having a terminal carboxyl group concentration of 0.1 µeq/g or higher and lower than 6 µeq/g and an intrinsic viscosity of 0.75 to 1 dL/g.

Meanwhile, it is known that the hydrolysis resistance of glass fibers themselves can also be improved using an epoxy resin as a sizing agent (refer to Patent Literatures 3 and 4). Patent Literature 3 describes the use of glass fibers surface-treated with a sizing agent containing a copolymer of an unsaturated carboxylic acid and/or an anhydride of an unsaturated carboxylic acid and an unsaturated monomer and an epoxy resin as essential components. In addition, Patent Literature 4 describes that a surface-treated glass fiber containing a novolac-type epoxy resin has excellent long-term heat resistance.

### Citation List

### Patent Literature

Patent Literature 1: International Publication No. WO 2009/150831
Patent Literature 2: Japanese Patent Laid-Open No. 2004-277718
Patent Literature 3: Japanese Patent Laid-Open No. 2003-201671
Patent Literature 4: Japanese Patent Laid-Open No. 2015-129073

### Summary of Invention

### Technical Problem

As described above, proposals have been made to improve the hydrolysis resistance of polyester resins, but the effects are not yet sufficient, and additional improvement is being expected.

The present invention has been made in consideration of the above-described conventional problem, and an object of the present invention is to provide a polyalkylene terephthalate resin composition that has much better hydrolysis resistance than ever and is strengthened with an inorganic filler and a resin molded article.

### Solution to Problem

As a result of intensive studies for achieving the above-described object, the present inventors have found that the use of a polyalkylene terephthalate resin containing glass fibers surface-treated with a sizing agent containing a polymer including a constituent unit derived from a carboxylic acid or the like and an epoxy resin, to which polyalkylene terephthalate resin is added a carbodiimide compound, makes the hydrolysis resistance much better than ever and completed the present invention.

One aspect of the present invention that achieves the above-described object is as described below.
(1) A polyalkylene terephthalate resin composition, comprising:
   a polyalkylene terephthalate resin (A);
   a carbodiimide compound (B); and
   an inorganic filler (C) surface-treated with a sizing agent containing a polymer including a constituent unit derived from a carboxylic acid and/or a carboxylic anhydride and an epoxy resin,
   wherein 0.4 to 10 parts by mass of the carbodiimide compound (B) is contained based on 100 parts by mass of the polyalkylene terephthalate resin (A).
(2) The polyalkylene terephthalate resin composition according to (1), wherein the carbodiimide compound (B) is an aromatic carbodiimide.
(3) The polyalkylene terephthalate resin composition according to (1) or (2), wherein the inorganic filler (C) is fibrous and has an average fiber diameter of 3 to 50 µm, and a content of the sizing agent is 0.4 to 3.0 parts by mass based on 100 parts by mass of the inorganic filler (C).
(4) A resin molded article obtained by molding the polyalkylene terephthalate resin composition according to (1) or (2).

### Advantageous Effects of Invention

According to the present invention, it is possible to provide a polyalkylene terephthalate resin composition that has much better hydrolysis resistance than ever and is strengthened with an inorganic filler and a resin molded article.

### Description of Embodiments

### <Polyalkylene terephthalate resin composition>

A polyalkylene terephthalate resin composition of the present embodiment contains a polyalkylene terephthalate resin (hereinafter, also referred to as "PAT resin") (A), a carbodiimide compound (B), and an inorganic filler (C) surface-treated with a sizing agent containing a polymer including a constituent unit derived from a carboxylic acid and/or a carboxylic anhydride and an epoxy resin, and furthermore, 0.4 to 10 parts by mass of the carbodiimide compound (B) is contained based on 100 parts by mass of the polyalkylene terephthalate resin (A).

The carbodiimide compound (B) and the inorganic filler (C) surface-treated with a sizing agent containing a polymer including a constituent unit derived from a carboxylic acid and/or a carboxylic anhydride and an epoxy resin make the hydrolysis resistance of the PAT resin composition of the present embodiment much better than ever. That is, the carbodiimide compound (B) and the inorganic filler (C) contribute together to improvement in the hydrolysis resistance.

Hereinafter, each component of the polyalkylene terephthalate resin composition of the present embodiment will be described.

### [Polyalkylene terephthalate resin (A)]

The PAT resin (A) is, among thermoplastic polyester resins that are obtained by a reaction between a dicarboxylic acid component containing a dicarboxylic acid compound and/or an ester-forming derivative thereof as a main component and a diol component containing a diol compound and/or an ester-forming derivative thereof as a main component, a thermoplastic polyester resin containing, as the dicarboxylic acid component, terephthalic acid and/or an ester-forming derivative thereof as a main component and, as the diol component, alkylene glycol and/or an ester-forming derivative thereof as a main component.

As the PAT resin, copolyesters with which a dicarboxylic acid component or a diol component other than the main components and, furthermore, as another copolymerizable monomer, an oxycarboxylic acid component, a lactone component or the like (hereinafter, referred to as the copolymerizable monomer in some cases) have been combined can also be used.

Examples of the dicarboxylic acid component other than the main component include aliphatic dicarboxylic acids (for example, approximately C4-40 dicarboxylic acids such as succinic acid, glutaric acid, adipic acid, pimelic acid, suberic acid, azelaic acid, sebacic acid, undecanedicarboxylic acid, dodecanedicarboxylic acid, hexadecanedicarboxylic acid and dimer acid, preferably, approximately C4-14 dicarboxylic acids), alicyclic dicarboxylic acids (for example, approximately C4-40 dicarboxylic acids such as hexahydrophthalic acid, hexahydroisophthalic acid, hexahydroterephthalic acid and nadic acid, preferably, approximately C8-12 dicarboxylic acids), aromatic dicarboxylic acids other than terephthalic acid (for example, phthalic acid, isophthalic acid, methyl isophthalic acid, methyl terephthalic acid, naphthalenedicarboxylic acids such as 2,6-naphthalenedicarboxylic acid and approximately C8-16 dicarboxylic acids such as 4,4'-biphenyldicarboxylic acid, 4,4'-diphenoxyetherdicarboxylic acid, 4,4'-dioxybenzoic acid, 4,4'-diphenylmethanedicarboxylic acid and 4,4'-diphenylketonedicarboxylic acid) derivatives thereof (for example, derivatives capable of forming an ester such as lower alkyl esters, aryl esters and acid anhydrides) and the like. Examples of the dicarboxylic acid component that is preferably used in combination with terephthalic acid include isophthalic acid, naphthalenedicarboxylic acid and the like, and two or more thereof can also be used in combination.

Preferably 50 mol% or more, more preferably 80 mol% or more and particularly preferably 90 mol% or more of the entire dicarboxylic acid component as the copolymerizable monomer is preferably an aromatic dicarboxylic acid compound. Furthermore, a polyvalent carboxylic acid, such as trimellitic acid or pyromellitic acid, an ester-forming derivative thereof (an alcohol ester or the like) or the like may also be used in combination as necessary. The use of such a polyfunctional compound in combination also makes it possible to obtain branched PAT resins.

Examples of the diol component other than the main component include aliphatic alkanediols (for example, approximately C2-12 aliphatic diols such as ethylene glycol, trimethylene glycol, propylene glycol, 1,4-butanediol, 1,3-butanediol, neopentyl glycol, hexanediol, octanediol and decanediol, preferably, among approximately C2-10 aliphatic diols, aliphatic alkanediols that are not used as the main component), polyoxyalkylene glycols (glycols having a plurality of approximately C2-4 oxyalkylene units, for example, diethylene glycol, dipropylene glycol, ditetramethylene glycol, triethylene glycol, tripropylene glycol, polytetramethylene glycol, and the like), alicyclic diols (for example, 1,4-cyclohexanediol, 1,4-cyclohexanedimethanol, hydrogenated bisphenol A and the like) and the like. In addition, an aromatic diol such as hydroquinone, resorcinol, bisphenol, 2,2-bis(4-hydroxyphenyl)propane, 2,2-bis-(4-(2-hydroxyethoxy)phenyl)propane or xylylene glycol may also be used in combination. Here, preferably 50 mol% or more, more preferably 80 mol% or more and particularly preferably 90 mol% or more of the entire diol component as the copolymerizable monomer is preferably alkylene glycol. Furthermore, a polyol, such as glycerin, trimethylolpropane, trimethylolethane or pentaerythritol or an ester-forming derivative thereof may also be used in combination as necessary. The use of such a polyfunctional compound in combination also makes it possible to obtain branched thermoplastic PAT resins.

Examples of oxycarboxylic acid (or the oxycarboxylic acid component or oxycarboxylic acids) include oxycarboxylic acids such as oxybenzoic acid, oxynaphthoic acid, hydroxyphenylacetic acid, glycolic acid and oxycaproic acid, derivatives thereof and the like. Examples of the lactone include C3-12 lactones such as propiolactone, butyrolactone, valerolactone and caprolactone (for example, ε-caprolactone or the like) and the like.

In the copolyester, the proportion of the copolymerizable monomer can be selected from, for example, a range of 0.01 mol% or more and 30 mol% or less and is normally 1 mol% or more and 25 mol% or less, preferably 3 mol% or more and 20 mol% or less and more preferably 5 mol% or more and 15 mol% or less. In addition, in a case where a homopolyester and a copolyester are used in combination, the proportion of the copolymerizable monomer is in a range of 0.01 mol% or more and 30 mol% or less (preferably 1 mol% or more and 25 mol% or less, more preferably 3 mol% or more and 20 mol% or less and particularly preferably 5 mol% or more and 15 mol% or less) with respect to all of the monomers, and the proportions of the homopolyester and the copolyester can be selected from a range (the former/the latter) of 99/1 to 1/99 (mass ratio), preferably 95/5 to 5/95 (mass ratio) and more preferably 90/10 to 10/90 (mass ratio).

Examples of a preferable PAT resin include homopolyesters or copolyesters containing an alkylene terephthalate unit as a main component (for example, 50 to 100 mol% and preferably 75 to 100 mol%). Examples thereof include homopolyesters such as poly C2-4 alkylene terephthalates, such as polyethylene terephthalate (PET), polytrimethylene terephthalate (PTT) and polybutylene terephthalate (PBT); copolyesters containing an alkylene terephthalate unit as a main component and an alkylene isophthalate unit as a copolymerization component; copolyesters containing an alkylene terephthalate unit as a main component and an alkylene naphthalate unit as a copolymerization component; and the like, these can be used singly or two or more thereof can be used in combination.

The amount of a terminal carboxyl group in the PAT resin is not particularly limited as long as the effect of the PAT resin composition of the present embodiment is not inhibited. The amount of the terminal carboxyl group in the PAT resin is preferably 30 meq/kg or less and more preferably 25 meq/kg or less. When the amount of the terminal carboxyl group in the PAT resin is too large, there is a possibility that the hydrolysis resistance may be impaired. In addition, the amount of the terminal carboxyl group in the PAT resin is preferably 3 meq/kg or more and more preferably 5 meq/kg or more to secure the adhesion to the inorganic filler surface-treated with the sizing agent.

The intrinsic viscosity (IV) of the PAT resin is not particularly limited as long as the effect of the PAT resin composition of the present embodiment is not inhibited. The intrinsic viscosity of the PAT resin is preferably 0.6 to 1.3 dL/g and more preferably 0.7 to 1.2 dL/g from the viewpoint of moldability. In a case where the intrinsic viscosity of the PAT resin is 0.7 to 1.0 dL/g, a PAT resin composition to be obtained becomes excellent particularly in terms of moldability. In addition, it is also possible to adjust the intrinsic viscosity by blending PAT resins having different intrinsic viscosities. For example, a PAT resin having an intrinsic viscosity of 0.78 dL/g can be prepared by blending a PAT resin having an intrinsic viscosity of 0.69 dL/g and a PAT resin having an intrinsic viscosity of 0.88 dL/g. The intrinsic viscosity (IV) of the PAT resin is defined as a value measured in o-chlorophenol under a condition of a temperature of 35°C.

As the PAT resin, a commercially available product may be used or a PAT resin produced by the copolymerization (polycondensation) of a dicarboxylic acid component or a reactive derivative thereof, a diol component or a reactive derivative thereof and, if necessary, a copolymerizable monomer by a conventional method, for example, transesterification or a direct esterification method may also be used.

### [Carbodiimide compound (B)]

In the PAT resin composition of the present embodiment, the carbodiimide compound (B) plays a role of improving the hydrolysis resistance.

The carbodiimide compound is a compound having a carbodiimide group (-N=C=N-) in the molecule. Examples of the carbodiimide compound include aliphatic carbodiimide compounds having an aliphatic main chain, alicyclic carbodiimide compounds having an alicyclic main chain and aromatic carbodiimide compounds having an aromatic main chain, and one or more selected therefrom can be used. Among those, an aromatic carbodiimide compound is preferably contained from the viewpoint of the heat resistance or moisture and heat resistance of the carbodiimide compound.

Examples of the aliphatic carbodiimide compound include diisopropylcarbodiimide, dioctyldecylcarbodiimide and the like. Examples of the alicyclic carbodiimide compound include dicyclohexylcarbodiimide and the like. Two or more thereof can also be used in combination.

Examples of the aromatic carbodiimide compound include mono- or dicarbodiimide compounds such as diphenylcarbodiimide, di-2,6-dimethylphenylcarbodiimide, N-triyl-N'-phenylcarbodiimide, di-p-nitrophenylcarbodiimide, di-p-aminophenylcarbodiimide, di-p-hydroxyphenylcarbodiimide, di-p-chlorophenylcarbodiimide, di-p-methoxyphenylcarbodiimide, di-3,4-dichlorophenylcarbodiimide, di-2,5-dichlorophenylcarbodiimide, di-o-chlorophenylcarbodiimide, p-phenylene-bis-di-o-triylcarbodiimide, p-phenylene-bis-dicyclohexylcarbodiimide, p-phenylene-bis-di-p-chlorophenylcarbodiimide and ethylene-bis-diphenylcarbodiimide; and polycarbodiimide compounds such as poly(4,4'-diphenylmethanecarbodiimide), poly(3,5'-dimethyl-4,4'-biphenylmethanecarbodiimide), poly(p-phenylenecarbodiimide), poly(m-phenylenecarbodiimide), poly(3,5'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide) and poly (triisopropylphenylenecarbodiimide). Two or more thereof can also be used in combination.

The number-average molecular weight of the carbodiimide compound (B) is preferably 3000 or more. When the number-average molecular weight is set within the above-described range, it is possible to prevent the generation of gas or odor in a case where the residence time is long during the melt-kneading or molding of the thermoplastic resin.

The content of the carbodiimide compound (B) is 0.4 to 10 parts by mass thereof based on 100 parts by mass of the PAT resin (A). When the content is less than 0.4 parts by mass, it is not possible to improve the hydrolysis resistance, and when the content exceeds 10 parts by mass, degradation of the fluidity or the generation of a gel component or a carbide during compounding (during the production of the resin composition) or during molding is likely to occur. The content of the carbodiimide compound (B) is preferably 0.5 to 7 parts by mass and more preferably 0.5 to 3 parts by mass.

### [Inorganic filler (C)]

In the PAT resin composition of the present embodiment, the inorganic filler (C) has been surface-treated with a sizing agent containing a polymer including a constituent unit derived from a carboxylic acid and/or a carboxylic anhydride and an epoxy resin.

The inorganic filler (C) being contained makes it possible to obtain an effect of improvement in the mechanical strength of a molded article and makes the hydrolysis resistance excellent by a surface treatment with a predetermined sizing agent.

The shape of the inorganic filler (C) is not particularly limited, and any of a fibrous inorganic filler and a non-fibrous inorganic filler can be used.

### (Fibrous inorganic filler)

Examples of the fibrous inorganic filler include glass fibers, carbon fibers, silica fibers, silica/alumina fibers, zirconia fibers, boron nitride fibers, silicon nitride fibers, boron fibers, potassium titanate fibers, metal fibers (for example, stainless steel, aluminum, titanium, copper, brass and the like) and the like.

Examples of typical fibrous inorganic fillers include glass fibers and carbon fibers, and glass fibers are preferably used from the viewpoint of easy procurement or cost. The kind of glass that serves as the raw material of the glass fibers is not particularly limited, but E glass or corrosion-resistant glass containing a zirconium element in the composition is preferably used from the viewpoint of the quality.

The average fiber diameter of the fibrous inorganic filler is not particularly limited and is, for example, 3 to 50 µm and more preferably 6 to 15 µm. The average fiber diameter of the fibrous inorganic filler is not particularly limited and can be set to, for example, 0.1 to 20 mm. The average fiber diameter and average fiber length of the fibrous inorganic filler are values calculated by weighted average after an image of the fibrous inorganic filler that is not yet added to the resin composition captured with a CCD camera is analyzed. For example, the average fiber diameter and average fiber length can be calculated using a dynamic image analysis method/particle (state) analyzer PITA-3 manufactured by Seishin Enterprise Co., Ltd. or the like.

As the fibrous inorganic filler, any of a fibrous inorganic filler having a circular cross section and a fibrous inorganic filler having a non-circular cross section can be used. Examples of the non-circular cross section include an oval shape, an elliptical shape, a cocoon shape and the like.

The aspect ratio (major axis diameter : minor axis diameter) is not particularly limited, but is preferably 1.5:1 to 6:1, more preferably 2:1 to 5:1 and still more preferably 2.5:1 to 4:1. With the aspect ratio within a range of 1.5:1 to 6:1, it is easy to obtain an effect such as dimensional stability or warpage reduction that arises from the flattened cross section, and it is also easy to suppress a decrease in strength attributed to the fact that the fibrous inorganic filler is too flat and is thus likely to crack.

### (Non-fibrous inorganic filler)

The shape of the non-fibrous inorganic filler is not particularly limited, and examples thereof include a granular shape, an ellipsoidal shape, a spindle shape, a plate shape, a scale shape, an irregular shape and the like. Specific examples of the non-fibrous inorganic filler include silicates such as mica, talc, quartz, calcium silicate, aluminum silicate, kaolin, clay, diatomaceous earth and bentonite; carbon-based materials such as carbon black and graphite; metal carbonates such as calcium carbonate and magnesium carbonate; metal sulfates such as zinc sulfate, calcium sulfate and barium sulfate; metal oxides such as zinc oxide, iron oxide, titanium oxide, antimony trioxide and alumina; glass flakes, glass beads, milled glass fibers, glass balloons, glass powder and the like; additionally, magnesium hydroxide, boehmite, spherical silica, ferrite, silicon carbide, silicon nitride, boron nitride, a variety of metal powders and the like, but are not limited thereto. From the viewpoint of low warpage improvement, a plate-like or scale-like inorganic filler such as mica, glass flake or talc is preferably contained and at least a plate-like inorganic filler such as mica or talc is more preferably contained.

The inorganic filler (C) may be used singly or two or more thereof may be used in combination.

In addition, the fibrous inorganic filler and the non-fibrous inorganic filler may be used in combination. The use of the fibrous inorganic filler and the non-fibrous inorganic filler in combination makes it possible to satisfy both low warpage and mechanical characteristics such as tensile strength. The ratio between the fibrous inorganic filler and the non-fibrous inorganic filler is not particularly limited, but the mass ratio of the fibrous inorganic filler to the non-fibrous inorganic filler is preferably 80/20 to 45/55, more preferably 75/25 to 55/45 and still more preferably 70/30 to 60/40. When the content of the non-fibrous inorganic filler is 20 mass% or more of the inorganic fillers, it is easy to obtain superior low warpage, and when the content is 55 mass% or less, it is easy to obtain superior tensile strength. The combination of the fibrous inorganic filler and the non-fibrous inorganic filler is not particularly limited, and examples thereof include combinations of a fibrous inorganic filler, such as glass fibers or carbon fibers, and a non-fibrous inorganic filler, such as glass flakes, mica or talc, and at least glass fibers and mica are preferably contained.

Next, the polymer having a constituent unit derived from a carboxylic acid and/or a carboxylic anhydride and the epoxy resin that are contained in the sizing agent, which is used for the surface treatment, in the inorganic filler (C) will be descried below.

### (Polymer having constituent unit derived from carboxylic acid and/or carboxylic anhydride)

In the polymer having a constituent unit derived from a carboxylic acid and/or a carboxylic anhydride (hereinafter, also simply referred to as "polymer"), examples of the carboxylic acid include unsaturated carboxylic acids such as acrylic acid, methacrylic acid, fumaric acid, maleic acid, succinic acid, cinnamic acid, itaconic acid, mesaconic acid and citraconic acid. These may have a substituent. Among these, acrylic acid, methacrylic acid and maleic acid are preferable. In addition, examples of the carboxylic anhydride include anhydrides of an unsaturated carboxylic acid such as maleic anhydride, itaconic anhydride, succinic anhydride, phthalic anhydride, glutaric anhydride, dodecenylsuccinic anhydride and chlorendic anhydride.

The above-described polymer may be a homopolymer obtained by polymerizing each of a carboxylic acid or a carboxylic anhydride singly or may be a copolymer obtained by copolymerizing two or more carboxylic acids or carboxylic anhydrides.

In the present embodiment, the weight-average molecular weight of the above-described polymer is not particularly limited, but is particularly preferably 10,000 to 1,000,000. When the weight-average molecular weight is 10,000 to 1,000,000, sufficient hydrolyzability can be obtained, and the inorganic filler sufficiently adheres to the surface.

### (Epoxy resin)

Examples of the epoxy resin include glycidyl ether-type epoxy resins, glycidyl ester-type epoxy resins (diglycidyl phthalate, diglycidyl tetrahydrophthalate, diglycidyl hexahydrophthalate, dimethylglycidyl phthalate, dimethylglycidyl hexahydrophthalate, dimer acid glycidyl ester, aromatic diglycidyl ester, cycloaliphatic diglycidyl ester and the like), glycidyl amine-type epoxy resins (tetraglycidyldiaminodiphenylmethane, triglycidyl-paraaminophenol, triglycidyl-metaaminophenol, diglycidyl toluidine, tetraglycidyl metaxylylenediamine, diglycidyl tribromoaniline, tetraglycidyl bisaminomethylcyclohexane and the like), heterocyclic epoxy resins (triglycidyl isocyanurate (TGIC), hydantoin-type epoxy resins and the like), cycloaliphatic epoxy resins (vinylcyclohexene dioxide, dicyclopentadiene oxide, alicyclic diepoxy acetal, alicyclic diepoxy adipate, alicyclic diepoxy carboxylate and the like), epoxidized polybutadiene and the like.

In the glycidyl ester-type epoxy resins, glycidyl ethers of an aromatic polyhydroxy compound such as glycidyl ethers of a polyhydroxy compound [bisphenol-type epoxy resins (for example, bisphenol A-type, bisphenol AD-type or bisphenol F-type epoxy resins and the like), resorcin-type epoxy resins; aliphatic epoxy resins (glycidyl ethers of an alkylene glycol or a polyoxyalkylene glycol and the like) and the like], novolac-type epoxy resins (phenol novolac-type or cresol novolac-type epoxy resins and the like) and the like are included.

Among the epoxy resins, aromatic epoxy resins (the bisphenol-type epoxy resins, the resorcinol-type epoxy resins, phenol novolac-type epoxy resins and the like) and the cyclic aliphatic epoxy resins are preferable. Among these, glycidyl ether-type aromatic epoxy resins, for example, the bisphenol-type epoxy resins, the phenol novolac-type epoxy resins and the like, are preferable.

The epoxy equivalent of the epoxy resin may be, for example, 100 to 1600 g/eq, preferably 100 to 800 g/eq, and more preferably 150 to 500 g/eq.

The number-average molecular weight of the epoxy resin may be, for example, 200 to 50,000, preferably 300 to 10,000 and more preferably 400 to 6,000.

In the present embodiment, the mass ratio (X/Y) of the polymer (X) to the epoxy resin (Y) in the sizing agent is not particularly limited, but is preferably 0.001 to 1.500.

The content of the sizing agent is preferably 0.1 to 5.0 parts by mass and more preferably 0.3 to 4.0 parts by mass based on 100 parts by mass of the inorganic filler (C). When the content of the surface treatment agent is 0.4 to 3.0 parts by mass, it is possible to improve the hydrolysis resistance.

In addition, the sizing agent may contain, in addition to the above-described components, each component of a urethane resin, a silane coupling agent, a lubricant, a nonionic surfactant, an antistatic agent and the like, and the ratio of each component added may be determined as necessary. The urethane resin contributes to the cohesion or dispersibility of the glass fibers and is obtained from a polyisocyanate, a polyol or the like. The silane coupling agent is used to improve the interfacial adhesion between the glass fibers and the sizing agent. As the silane coupling agent, aminosilane, epoxysilane, chlorosilane, mercaptosilane, vinylsilane, acrylic silane or the like can be used. The lubricant is used to suppress wear due to the friction between the glass fibers. As the lubricant, aliphatic amides, quaternary ammonium salts and the like can be used. In addition, as the nonionic surfactant, a synthetic alcohol-based surfactant, a natural alcohol-based surfactant and an aliphatic acid ester-based surfactant can be used.

In the PAT resin composition of the present embodiment, the content of the inorganic filler (C) is preferably 10 to 100 parts by mass and more preferably 20 to 80 parts by mass based on 100 parts by mass of the PAT resin.

### [Other components]

The PAT resin composition of the present embodiment may contain other components as necessary. Examples of other components include an inorganic filler other than the inorganic filler (C), an antioxidant, a weathering stabilizer, a molecular weight regulator, an ultraviolet absorber, an antistatic agent, a dye, a pigment, a lubricant, a crystallization accelerator, a crystal nucleating agent, a near infrared absorber, a flame retardant, a flame retardant assistant, an organic filler, a colorant and the like, but are not limited thereto.

### <Resin molded article>

A resin molded article of the present embodiment is obtained by molding the PAT resin composition of the present embodiment described above. Therefore, similar to the PAT resin composition of the present embodiment, the resin molded article exhibits an effect of making the hydrolysis resistance way better than ever.

A method for fabricating the resin molded article using the PAT resin composition of the present embodiment is not particularly limited, and a well-known method can be employed. For example, the PAT resin composition of the present embodiment is injected into an extruder and melt-kneaded into pellets, and these pellets are injected into an injection molding machine equipped with a predetermined mold and injection-molded, whereby the resin molded article can be fabricated.

The PAT resin composition of the present embodiment can be suitably used as a resin composition for molded articles that are exposed to high-temperature and high-humidity environments for a long period of time such as automobiles, trains, aviation industry applications and the like. This molded article composed of the resin composition is capable of preventing the occurrence of deterioration by hydrolysis even in the case of being used in a sufficiently high-temperature and high-humidity environment for a long period of time and thus can be used for connectors and the like.

### Examples

Hereinafter, the present embodiment will be more specifically described using Examples, but the present embodiment is not limited to the following Examples.

### [Examples 1 to 6 and Comparative Examples 1 to 10]

In each of Examples, Comparative Examples and Reference Examples, components (A) to (F) were melt-kneaded and extruded in proportions (parts by mass) shown in Tables 2 and 3 using a twin screw extruder having 30 mmφ (manufactured by The Japan Steel Works, Ltd., TEX30C) in a discharge amount of 15 kg/h at a screw rotation speed of 130 rpm with cylinder temperatures at a raw material supply portion and a die tip portion set to 260°C, cylinder temperature therebetween set to 220°C to 260°C, and pellets composed of a PBT resin composition were obtained. The detail of each component shown in Tables 2 and 3 is as described below. (1) PAT resin (A);
· PBT resin (A1): Manufactured by POLYPLASTICS CO., LTD., polybutylene terephthalate resin DURANEX PBT 300FP
· PBT resin (A2): Manufactured by POLYPLASTICS CO., LTD., polybutylene terephthalate resin DURANEX PBT 500FP (2) Carbodiimide compound (B): Manufactured by LANXESS, aromatic polycarbodiimide Stabaxol P-100 (3) Inorganic filler (C);
· Glass fibers (C1): Glass fibers made of E glass, average fiber diameter: 13 µm (surface treatment agent: 0.5 mass% of phenol novolac resin and 0.2 mass% of copolymer of maleic anhydride, methyl methacrylate and methyl acrylate)
· Glass fibers (C2): Glass fibers made of E glass, average fiber diameter: 13 µm (surface treatment agent: 0.5 mass% of phenol novolac resin and 0.2 mass% of polymer of methacrylic acid)
· Glass fibers (C3): Glass fibers made of E glass, average fiber diameter: 13 µm (surface treatment agent: 0.5 mass% of phenol novolac resin)
· Glass fibers (C4): Glass fibers made of E glass, average fiber diameter: 13 µm (surface treatment agent: 0.2 mass% of copolymer of maleic anhydride, methyl methacrylate and methyl acrylate)
· Glass fibers (C5): Glass fibers made of E glass, average fiber diameter: 13 µm (surface treatment agent: 0.55 mass% of phenol novolac resin and 0.46 mass% of copolymer of maleic anhydride, methyl methacrylate and methyl acrylate)
· Glass fibers (C6): Glass fibers made of E glass, average fiber diameter: 13 µm (surface treatment agent: 1.5 mass% of phenol novolac resin and 0.6 mass% of copolymer of maleic anhydride, methyl methacrylate and methyl acrylate)
(4) Antioxidant (D): Irganox 1010 manufactured by BASF Japan Ltd.
(5) Lubricant (E): Manufactured by Riken Vitamin Co., Ltd., RIKEMAL B-74
(6) Epoxy compound (F): Manufactured by Mitsubishi Chemical Corporation, EPIKOTE 1004

Components of sizing agents used for the surface treatments of the glass fibers (C1) to (C6) are shown in Table 1. Numerical values shown in Table 1 are each the content (mass%) of each component relative to all of the glass fibers. In the glass fibers (C1) and (C2), 0.7 parts by mass of the sizing agent is contained based on 100 parts by mass of the glass fibers (C1) or (C2). Similarly, in the glass fibers (C5) and (C6), the contents of the sizing agents are 1.02 parts by mass and 2.15 parts by mass based on 100 parts by mass of the glass fibers (C5) or (C6), respectively.

**[Table 1]**

| | Phenol novolac-type epoxy resin [mass%] | Copolymer of maleic anhydride, methyl methacrylate and methyl acrylate [mass%] | Polymer of methacrylic acid [mass%] |
|---|---|---|---|
| Glass fiber (C1) | 0.5 | 0.2 | - |
| Glass fiber (C2) | 0.5 | - | 0.2 |
| Glass fiber (C3) | 0.5 | - | - |
| Glass fiber (C4) | - | 0.2 | - |
| Glass fiber (C5) | 0.55 | 0.46 | - |
| Glass fiber (C6) | 1.5 | 0.6 | - |

### [Evaluation]

The following evaluation test was performed using the pellets obtained in each of Examples, Comparative Examples and Reference Examples.

### <<Hydrolysis resistance>>

The pellets fabricated in the compositions shown in Tables 2 and 3 were dried at 140°C for three hours and injection-molded at a cylinder temperature of 260°C and a mold temperature of 80°C, thereby fabricating 1A-type tensile test pieces according to ISO 3167. Regarding the obtained test pieces, tensile strengths were measured according to ISO 527-1, 2. Measurement results are shown in Tables 2 and 3. Next, the test pieces were exposed to 121°C and 100%RH using a PCT treatment device (high accelerated stress testing machine), tensile strengths after wet heat tests (after 50 hours, after 100 hours and after 150 hours) were measured, and the strength retention rates before and after wet heat treatment were calculated. Calculation results are shown in Tables 2 and 3.

**[Table 2]**

| | | Example 1 | Example 2 | Example 3 | Example 4 | Example 5 | Example 6 |
|---|---|---|---|---|---|---|---|
| PAT resin (A) | PBT resin (A1) | - | - | 100 | 100 | 100 | 100 |
| | PBT resin (A2) | 100 | 100 | - | - | - | - |
| Carbodiimide compound (B) | Aromatic polycarbodiimide | 0.7 | 1.5 | 1.5 | 1.5 | 1.5 | 1.5 |
| Inorganic filler (C) | Glass fiber (C1) | 43.4 | 43.7 | 43.7 | - | - | - |
| | Glass fiber (C2) | - | - | - | 43.7 | - | - |
| | Glass fiber (C3) | - | - | - | - | - | - |
| | Glass fiber (C4) | - | - | - | - | - | - |
| | Glass fiber (C5) | - | - | - | - | 43.7 | - |
| | Glass fiber (C6) | - | - | - | - | - | 43.7 |
| Antioxidant (D) | | 0.3 | 0.3 | 0.3 | 0.3 | 0.3 | 0.3 |
| Lubricant (E) | | 0.3 | 0.3 | 0.3 | 0.3 | 0.3 | 0.3 |
| Epoxy compound (F) | | - | - | - | - | - | - |
| Tensile strength (MPa) | | 140 | 140 | 142 | 141 | 142 | 140 |
| Hydrolysis resistance tensile strength retention rate (%) | After 50 hours | 92 | 92 | 91 | 89 | 90 | 91 |
| | After 100 hours | 84 | 87 | 84 | 82 | 87 | 88 |
| | After 150 hours | 77 | 82 | 74 | 70 | 77 | 80 |

**[Table 3]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| PAT resin (A) | PBT resin (A1) | 100 | 100 | 100 | 100 | 100 | 100 | 100 | 100 | 100 | 100 |
| Carbodiimide compound (B) | Aromatic polycarbodiimide | - | - | 0.7 | 1.5 | - | - | 1.5 | - | 0.3 | - |
| Inorganic filler (C) | Glass fiber (C1) | - | - | - | - | - | - | - | 43.1 | 43.2 | 44.4 |
| | Glass fiber (C2) | - | - | - | - | - | - | - | - | - | - |
| | Glass fiber (C3) | 43.1 | 43.7 | 43.4 | 43.7 | - | - | - | - | - | - |
| | Glass fiber (C4) | - | - | - | - | 43.1 | 43.7 | 43.7 | - | - | - |
| | Glass fiber (C5) | - | - | - | - | - | - | - | - | - | - |
| | Glass fiber (C6) | | | | | | | | | | |
| Antioxidant (D) | | 0.3 | 0.3 | 0.3 | 0.3 | 0.3 | 0.3 | 0.3 | 0.3 | 0.3 | 0.3 |
| Lubricant (E) | | 0.3 | 0.3 | 0.3 | 0.3 | 0.3 | 0.3 | 0.3 | 0.3 | 0.3 | 0.3 |
| Epoxy compound (F) | | - | 1.5 | - | - | - | 1.4 | - | - | - | 3.0 |
| Tensile strength (MPa) | | 144 | 145 | 142 | 138 | 141 | 150 | 140 | 153 | 147 | 148 |
| Hydrolysis resistance tensile strength retention rate (%) | After 50 hours | 75 | 83 | 92 | 78 | 33 | 66 | 53 | 76 | 80 | 78 |
| | After 100 hours | 30 | 40 | 57 | 54 | 24 | 29 | 48 | 33 | 48 | 44 |
| | After 150 hours | 0 | 0 | 36 | 48 | 0 | 0 | 36 | 0 | 20 | 14 |

From Tables 2 and 3, it is found that, in Examples 1 to 6, favorable evaluation results were obtained regarding the hydrolysis resistance.

On the other hand, in Comparative Example 8, which was different from Example 3 only in terms of the fact that the carbodiimide compound (B) was not used, the hydrolysis resistance was poor.

In addition, in Comparative Example 4, which was different from Example 3 only in terms of the fact that the glass fibers (C3) surface-treated with the sizing agent containing only the phenol novolac resin were used, the hydrolysis resistance was poor.

Furthermore, in Comparative Example 7, which was different from Example 3 only in terms of the fact that the glass fibers (C4) surface-treated with the sizing agent containing only the copolymer of maleic anhydride, methyl methacrylate and methyl acrylate were used, the hydrolysis resistance was poor.

Furthermore, in Comparative Example 9 where the content of the carbodiimide compound (B)was excessively small, the hydrolysis resistance was poor.

Furthermore, in Comparative Example 10 where the epoxy compound (F) was added compared with the composition of Comparative Example 8, the hydrolysis resistance was also poor.

## Claims

1. A polyalkylene terephthalate resin composition, comprising:
a polyalkylene terephthalate resin (A);
a carbodiimide compound (B); and
an inorganic filler (C) surface-treated with a sizing agent containing a polymer including a constituent unit derived from a carboxylic acid and/or a carboxylic anhydride and an epoxy resin,
wherein 0.4 to 10 parts by mass of the carbodiimide compound (B) is contained based on 100 parts by mass of the polyalkylene terephthalate resin (A).

2. The polyalkylene terephthalate resin composition according to claim 1, wherein the carbodiimide compound (B) is an aromatic carbodiimide.

3. The polyalkylene terephthalate resin composition according to claim 1 or 2, wherein the inorganic filler (C) is fibrous and has an average fiber diameter of 3 to 50 µm, and a content of the sizing agent is 0.4 to 3.0 parts by mass based on 100 parts by mass of the inorganic filler (C).

4. A resin molded article obtained by molding the polyalkylene terephthalate resin composition according to claim 1 or 2.
